(19) Europäisches Patentamt

European Patent Office

Office européen des brevets

(11) **EP 1 096 221 A1**

(12) **EUROPÄISCHE PATENTANMELDUNG**

(43) Veröffentlichungstag:
02.05.2001 Patentblatt 2001/18

(51) Int. Cl.⁷: **G01B 5/255**, G01B 21/26,
G01M 17/06

(21) Anmeldenummer: **00116057.1**

(22) Anmeldetag: **26.07.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **25.10.1999 DE 19951290**

(71) Anmelder: **Beissbarth GmbH**
**80971 München (DE)**

(72) Erfinder: **Egle, Karl**
**73230 Kirchheim/Teck (DE)**

(74) Vertreter:
**Kirschner, Klaus Dieter, Dipl.-Phys.**
**Schneiders & Behrendt**
**Rechtsanwälte - Patentanwälte**
**Sollner Strasse 38**
**81479 München (DE)**

(54) **Methode zur Messung des Seitengleitwinkels zur Bestimmung der Radausrichtung**

(57) Bei dem Verfahren und der Vorrichtung zur Spurprüfung an einem am Kraftfahrzeug montierten Rad wird mit dem Rad ein Spurprüfplatte überfahren, die senkrecht zur Fahrtrichtung bewegbar gelagert ist. Die Auslenkung der Spurprüfplatte beim Überfahren wird gemessen, und aus der Auslenkung wird die Spur des Rades ermittelt. Die Auslenkung der Spurprüfplatte wird während des Überfahrens an einer Vielzahl von Meßpunkten gemessen und in einer Meßkurve festgehalten. Die Meßkurve wird in Meßkurvenbereiche unterteilt, von denen ein erster Meßkurvenbereich für den Einfluß des Sturzes und ein zweiter Bereich für den Einfluß der Spur charakteristisch ist. Aus der Steigung der Meßwertkurve im zweiten Bereich wird die Spur des Rades ermittelt.

FIG 2

EP 1 096 221 A1

**Beschreibung**

Die Erfindung betrifft ein Verfahren zur Spurprüfung an einem am Kraftfahrzeug montierten Rad, bei dem mit dem Rad eine Spurprüfplatte überfahren wird, die senkrecht zur Fahrtrichtung bewegbar gelagert ist, die Auslenkung der Spurprüfplatte beim Überfahren gemessen wird und aus der Auslenkung die Spur des Rades ermittelt wird, und ferner eine Vorrichtung zur Spurprüfung an einem am Kraftfahrzeug montierten Rad, umfassend eine Spurprüfplatte, die mit dem Rad überfahren wird, und die senkrecht zur Fahrtrichtung bewegbar gelagert ist, eine Meßeinrichtung, die die Auslenkung der Spurprüfplatte beim Überfahren mißt, und eine Auswertungseinrichtung, die aus der Auslenkung der Spurprüfplatte die Spur des Rades ermittelt.

Bei Spurprüfungsvorrichtungen unterscheidet man solche, bei denen nur eine Spurprüfplatte vorgesehen ist, und solche, bei denen in Fahrtrichtung vor der Spurprüfplatte eine sog. Ausgleichsplatte vorgesehen ist. In beiden Systemen kann mit Hilfe der Spurprüfplatte eine Aussage über der aktuellen Zustand der Fahrwerksgeometrie, insbesondere Spurtreue und Seitenführungskräfte, getroffen werden. Bei Überfahren der Spurplatte mit konstanter Geschwindigkeit können hierbei Spurabweichugen von -16mm/m bis +16mm/m gemessen werden. Eine Achse bei korrekt eingestellter Fahrwerksgeometrie sollte den Wert 0mm/m haben. Allgemein wird die Spur als Abweichung der Radstellung zum Geradeauslauf definiert, und wird als Winkel zwischen der Radmittelebene und der sog. geometrischen Fahrachse ausgedrückt, wobei die geometrische Fahrachse als Winkelhalbierende der Winkelstellungen der Hinterräder definiert ist.

Bei Kraftfahrzeugen mit konventionellem Fahrwerk, die eine Vorspur bzw. Nachspur und keinen oder nur einen minimalen Sturz aufweisen, kann die Spurprüfung problemlos auf einer Spurprüfplatte ohne Ausgleichsplatte durchgeführt werden. Die Auslenkung der Spurprüfplatte kann durch verschiedene Faktoren beeinflußt werden, insbesondere die Überfahrgeschwindigkeit, die Fahrtrichtung und die Komponenten der Fahrwerksgeometrie, nämlich nach Lauf, Spreizung, Sturz und Spur. Besonders der Sturz, der exakt nur mit einer präzisen Achsvermessung feststellbar ist, führt dazu, daß die Messungen der Seitenführungskräfte beim Überfahren der Spurprüfplatte verfälscht werden. Weil die Spurprüfplatte senkrecht zur Fahrtrichtung beweglich gelagert ist, entspannt sich zunächst das Fahrwerk einer Achse, wobei eine Auslenkung der Spurprüfplatte durch den Sturz verursacht wird, und dann erst erfolgt die eigentliche Messung des Spurwertes.

Um dieses Problem bei Meßvorrichtungen mit einer einzigen Spurprüfplatte zu lösen, wird bisher eine Ausgleichsplatte verwendet, die die hohen Seitenführungskräfte des Sturzes abbauen und das Fahrwerk entspannen soll, bevor die eigentliche Messung auf der Spurprüfplatte erfolgt. Erst beim anschließenden Überfahren der Spurprüfplatte wird die Spurmessung durchgeführt. Dabei ergibt sich jedoch der Nachteil, daß beim Überfahren der Spurprüfplatte sich durch die Drehung des Rades die Seitenkräfte wieder langsam aufbauen, so daß die Messung wiederum verfälscht wird.

Es kommen immer mehr Fahrzeuge auf den Markt, die beim Überfahren der Spurprüfplatte sehr hohe Auslenkungen erreichen, die teilweise sogar über den Meßbereich hinausgehen, obwohl die Fahrwerksgeometrie korrekt eingestellt ist. Um diesen Effekt zu vermeiden, gehen immer mehr Prüfstandhersteller dazu über, vor der Spurprüfplatte die Ausgleichsplatte anzubringen.

Da beim Überfahren der Ausgleichsplatte die Seitenführungskräfte in Bewegung umgesetzt werden, führt dies zu einer Entspannung der Fahrwerksgeometrie. Beim nachfolgenden Überfahren der Spurprüfplatte werden damit entsprechend niedrigere Werte erreicht.

Zusammenfassend kann festgestellt werden, daß die Ausgleichsplatte den angestrebten Zweck nicht voll erfüllt und daß andererseits die Kosten der Gesamtvorrichtung durch die Ausgleichsplatte nicht unerheblich erhöht werden, deren Kosten etwa ein Drittel der Gesamtkosten der Spurprüfvorrichtung ausmacht.

Die Spurprüfplatte soll nicht die elektronische Achsvermessung ersetzen, sondern vielmehr überprüfen, ob es notwendig ist, eine elektronische Achsvermessung durchzuführen. Beim Überfahren der Spurprüfplatte wird die Abweichung der Spur vom Sollwert in mm/m angezeigt. Die Erfahrung zeigt, daß man von folgenden Grenzwerten ausgehen kann: Wenn die Abweichung der Spur vom Sollwert $\leq \pm 3$mm/m ist, ist der Spurwert in Ordnung. Wenn die Abweichung zwischen $\pm 4$ bis $\pm 6$ mm/m liegt, liegt der Spurwert im Grenzbereich. Wenn die Abweichung größer ist als $\pm 6$mm/m, ist eine elektronische Achsvermessung notwendig. Dabei ist zu beachten, daß die Grenzwerte durch fahrzeugspezifische Toleranzbereiche und unterschiedliche Reifendurchmesser etwas schwanken können.

Demgegenüber liegt der Erfindung die Aufgabe zugrunde, ein Verfahren und eine Vorrichtung zur Spurprüfung an einem am Kraftfahrzeug montierten Rad bereitzustellen, wobei eine zuverlässige Spurprüfung bzw. -messung verbunden mit geringen Gerätekosten durchführbar ist.

Dazu ist das erfindungsgemäße Verfahren dadurch gekennzeichnet, daß die Auslenkung der Spurprüfplatte während des Überfahrens an einer Vielzahl von Meßpunkten gemessen und in einer Meßkurve festgehalten wird, daß die Meßkurve in Meßkurvenbereiche aufgeteilt wird, von denen ein erster Meßkurvenbereich für den Einfluß des Sturzes und ein zweiter Meßkurvenbereich für den Einfluß der Spur charakteristisch ist, und daß aus der Steigung der Meßkurve im zweiten Bereich die Spur des Rades ermittelt wird. Damit kann die Spurprüfung unter Verwendung nur einer Spurprüfplatte, d. h. ohne Ausgleichsplatte, mit der gewünschten Genauigkeit durchgeführt werden. Da die mechanische Ausgleichsplatte bei der Spurprüfung nicht mehr benötigt wird, um zuverlässige Meßergebnisse bei kritischen Fahrzeugtypen zu erhalten, werden die entsprechenden Gerätekosten eingespart. Der Einfluß des Sturzes auf die Messung wird bei der Auswertung der Meßkurven eliminiert.

Eine vorteilhafte Ausgestaltung des erfindungsgemäßen Verfahrens ist dadurch gekennzeichnet, daß 200 bis 400 Meßwerte beim Überfahren der Spurprüfplatte gemessen und abgespeichert werden. Damit wird eine solide Basis für die spätere Auswertung der Meßkurve geschaffen.

Eine weitere vorteilhafte Ausgestlatung des erfindungsgemäßen Verfahrens ist dadurch gekennzeichnet, daß die Auslenkung der Spurprüfplatte in analoge elektrische Signale umgesetzt wird, und daß die analogen Signale digitalisiert und in einem Meßwertpuffer abgelegt werden. Die Daten liegen daher in vorteilhafter Weise in digitaler Form vor und können so entsprechend weiterverarbeitet werden.

Eine weitere vorteilhafte Ausgestlatung des erfindungsgemäßen Verfahrens ist dadurch gekennzeichnet, daß die Zeit zwischen zwei Meßpunkten einige ms, vorzugsweise 2 bis 5 ms, beträgt.

Eine weitere vorteilhafte Ausgestlatung des erfindungsgemäßen Verfahrens ist dadurch gekennzeichnet, daß die Auflösung einige bit, vorzugsweise 10 bit, beträgt.

Eine weitere vorteilhafte Ausgestaltung des erfindungsgemäßen Verfahrens ist dadurch gekennzeichnet, daß die Meßkurve vor der Auswertung durch fließende Mittelwertbildung geglättet wird. Dadurch werden die Voraussetzungen für eine hinreichend genaue Bestimmung der Steigungen der Meßkurve verbessert, so daß die Meßergebnisse zuverlässiger werden.

Eine weitere vorteilhafte Ausgestlatung des erfindungsgemäßen Verfahrens ist dadurch gekennzeichnet, daß ein Fenster, das bei der fließenden Meßwertbildung verwendet wird, einige Meßwerte, vorzugsweise 5 bis 10 Meßwerte, umfaßt.

Eine weitere vorteilhafte Ausgestaltung des erfindungsgemäßen Verfahrens ist dadurch gekennzeichnet, daß der erste Bereich vom Beginn der Messung bis zu einem Startpunkt für den zweiten Bereich reicht, an dem die Steigung der Meßwertkurve einen vorgegebenen ersten Grenzwert überschreitet. Eine Analyse der an tatsächlichen Kraftfahrzeugen gemessenen Meßwertkurven hat ergeben, daß der erste und der zweite Bereich aufgrund unterschiedlicher Steigungen klar erkennbar sind. Da die Steigung im zweiten Bereich, der für die Spur charakteristisch ist, immer kleiner als die Steigung in dem ersten Bereich ist, kann der Startpunkt des zweiten Bereiches in einfacher Weise durch das genannte Kriterium festgestellt werden.

Eine weitere vorteilhafte Ausgestaltung des erfindungsgemäßen Verfahrens ist dadurch gekennzeichnet, daß der Startpunkt für den zweiten Bereich verworfen wird, wenn die Steigung der Meßwertkurve nach einer Festlegung desselben einen vorgegebenen zweiten Grenzwert überschreitet. Damit werden Stufen, die im Verlauf der Meßwertkurve in dem ersten Bereich auftreten können, und die den Übergang von dem ersten Bereich in den zweiten Bereich vortäuschen könnten, ausgefiltert. Dadurch wird die Sicherheit erhöht, daß der tatsächliche Startpunkt des zweiten Bereiches genommen wird.

Eine weitere vorteilhafte Ausgestaltung des erfindungsgemäßen Verfahrens ist dadurch gekennzeichnet, daß ein Endpunkt des zweiten Bereiches dadurch festgelegt wird, daß an dem Endpunkt die Steigung kleiner als ein vorgegebener dritter Grenzwert ist. Wenn das Rad die Spurprüfplatte überfahren hat, kehrt die Spurprüfplatte in ihre Ausgangslage zurück, so daß die Meßwertkurve entsprechend abfällt. Dieser Abfall in der Meßwertkurve markiert den Endpunkt des zweiten Bereiches.

Eine weitere vorteilhafte Ausgestaltung des erfindungsgemäßen Verfahrens ist dadurch gekennzeichnet, daß die Steigung der Meßwertkurve im zweiten Bereich aus dem Startpunkt und dem Endpunkt berechnet wird, d. h. daß eine Gerade durch diese beiden Punkte gelegt und deren Steigung festgestellt wird. Dies ist eine sehr einfache, aber wirkungsvolle Auswertung des zweiten Meßwertbereiches, die in der Praxis befriedigende Ergebnisse gebracht hat.

Eine weitere vorteilhafte Ausgestaltung des erfindungsgemäßen Verfahrens ist dadurch gekennzeichnet, daß der von der Spur gelieferte Beitrag der Auslenkung durch Kalibrierung aus der ermittelten Steigung in dem zweiten Bereich ermittelt wird. Durch die Kalibrierung oder Normung wird der Einfluß des Sturzes auf das Meßergebnis eliminiert.

Schießlich ist eine weitere vorteilhafte Ausgestaltung des erfindungsgemäßen Verfahrens dadurch gekennzeichnet, daß nach Ermittlung der Steigung im zweiten Bereich eine Parallelverschiebung der Geraden durch den Nullpunkt des Koordinatensystems Auslenkung/Zeit bzw. Auslenkung/Weg durchgeführt und der Endwert der so ermittelten Geraden als Endergebnis ausgegeben wird.

Die oben genannte Aufgabe wird bei der eingangs genannten Vorrichtung dadurch gelöst, daß die Meßeinrichtung die Auslenkung der Spurprüfplatte während des Überfahrens an einer Vielzahl von Meßpunkten mißt, daß ein Speicher vorgesehen ist, in dem die Meßpunkte abgelegt werden, daß eine Recheneinrichtung vorgesehen ist, die die Meßpunkte in eine Meßkurve umsetzt und die Meßkurve in Bereiche aufteilt, von denen ein erster Meßkurvenbereich für den Einfluß des Sturzes und ein zweiter Meßkurvenbereich für den Einfluß der Spur charakteristisch ist, und die aus der Steigung der Meßkurve im zweiten Meßkurvenbereich die Spur des Rades ermittelt.

Eine weitere vorteilhafte Ausgestaltung der erfindungsgemäßen Vorrichtung ist dadurch gekennzeichnet, daß die Meßeinrichtung an der Spurmeßplatte derart angeordnet ist, daß die Auslenkung der Spurprüfplatte in analoge elektrische Signale umgesetzt wird, und daß ein Analog/Digital-Wandler vorgesehen ist, der die analogen Signale digitalisiert, und daß ein Meßwertpuffer für die Abspeicherung der digitalen Meßwerte vorgesehen ist.

Eine weitere vorteilhafte Ausgestaltung der erfindungsgemäßen Vorrichtung ist gekennzeichnet durch eine Mittelwertbildungseinrichtung durch die Meßwertkurve vor deren Auswertung durch fließende Mittelwertbildung geglättet wird.

Eine weitere vorteilhafte Ausgestaltung der erfindungsgemäßen Vorrichtung ist gekennzeichnet durch eine Steigungsrecheneinrichtung, durch die die Steigung der Meßwertkurve in dem zweiten Bereich aus dem Startpunkt und dem Endpunkt berechnet wird.

Eine weitere vorteilhafte Ausgestaltung der erfindungsgemäßen Vorrichtung ist gekennzeichnet durch eine Kalibrierungseinrichtung, durch die der von der Spur gelieferte Beitrag der Auslenkung durch Kalibrierung der ermittelten Steigung ermittelt wird.

Ausführungsbeispiele der Erfindung werden nun anhand der beiliegenden Zeichnungen beschrieben. Es zeigen:

Fig. 1    eine Draufsicht auf den Unterbau einer Spurprüfplatte;

Fig. 2    eine graphische Darstellung zur Erläuterung des erfindungsgemäßen Verfahrens; und

Fig. 3 und 4    klassisch gemessene Meßwertkurven von zwei verschiedenen Kraftfahrzeugtypen.

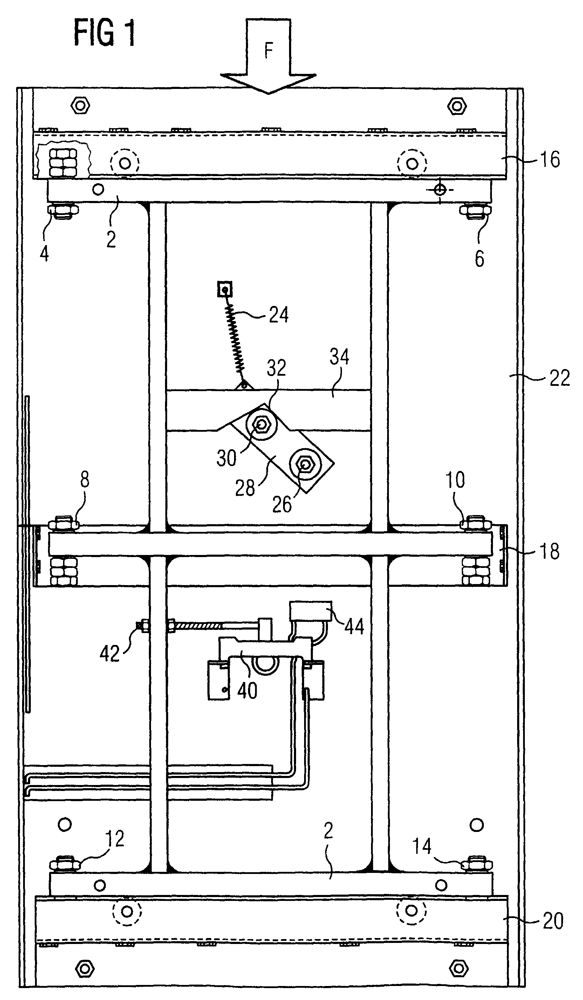

Fig. 1 zeigt eine Draufsicht auf das "Innenleben" einer Spurprüfvorrichtung, wobei die eigentliche Platte zur Vereinfachung der Darstellung weggelassen wurde. Die Spurprüfplatte wird auf einen Rahmen 2 aufgeschraubt, der seitlich, d. h. senkrecht zur Fahrtrichtung (Pfeil F) verschiebbar gelagert ist. Dazu bewegt sich der Rahmen 2 auf Rollen 4, 6, 8, 10, 12, 14, die in O-Schienen 16, 18, 20 geführt sind. Dadurch kann die Spurprüfplatte seitlich, d. h. senkrecht zur Fahrtrichtung ausweichen, wenn ein Fahrzeug mit einem Rad darüber fährt, welches große Seitenkräfte auf die Spurprüfplatte ausübt.

Im folgenden wird die Einrichtung beschrieben, mit der die Spurprüfplatte bei einer Auslenkung wieder in die Nullage zurückgeholt wird. Diese Einrichtung dient dazu, die Spurprüfplatte zurückzuholen, ohne daß die gemessenen Daten dabei verfälscht werden, wenn es beim Überfahren der Spurprüfplatte zu einem seitlichen Versatz derselben kommt.

Eine an einer Grundplatte 22 für den Rahmen 2 verankerte Zugfeder 24 ist mit einer ebenfalls an der Grundplatte 22 über einen Drehzapfen 26 befestigten Platte 28 eingehängt. Auf der Platte 28 ist eine drehbar gelagerte Scheibe 30 befestigt. Die Scheibe 30 greift in eine Einkerbung 32 in einer Querstrebe 34 des Rahmens 2 ein. Die Einkerbung 32 hat unsymmetrische Schenkel, d. h. die beiden Schenkel weisen eine unterschiedliche Steigung im Bezug auf die Querstrebe 34 auf. Wenn sich die Scheibe 30 am tiefsten Punkt der Einkerbung 32 befindet, wie in Fig. 1 dargestellt ist, befindet sich die Spurprüfplatte in Nullstellung. Wenn der Rahmen 2 zur Seite gedrückt wird, bewegt sich die Scheibe 30 auf einem der Schenkel der Einkerbung 32 entlang. Sind keine Seitenkräfte mehr vorhanden, wird die Scheibe 30 durch die Zugfeder 24 in die Ausgangsstellung zurückgezogen, wobei Nachschwingungen durch die Feder gedämpft werden. Die Spurprüfplatte ist dann wieder in Nullstellung.

Die seitliche Auslenkung der Spurprüfplatte wird durch ein an der Grundplatte 32 angeschraubten Potentiometer 40 in analoge elektrische Signale umgesetzt. Der Potentiometer 40 ist über eine Gewindestange 42 mit dem Rahmen 2 verbunden, so daß eine Verschiebung des Rahmens und damit der Spurprüfplatte zwangsläufig zu einer Verstellung des Potentiometers proportional zu der Auslenkung führt. Über einen Meßwertverstärker 44 gelangen die elektrischen Signale zur Auswertungs- und Anzeigevorrichtung.

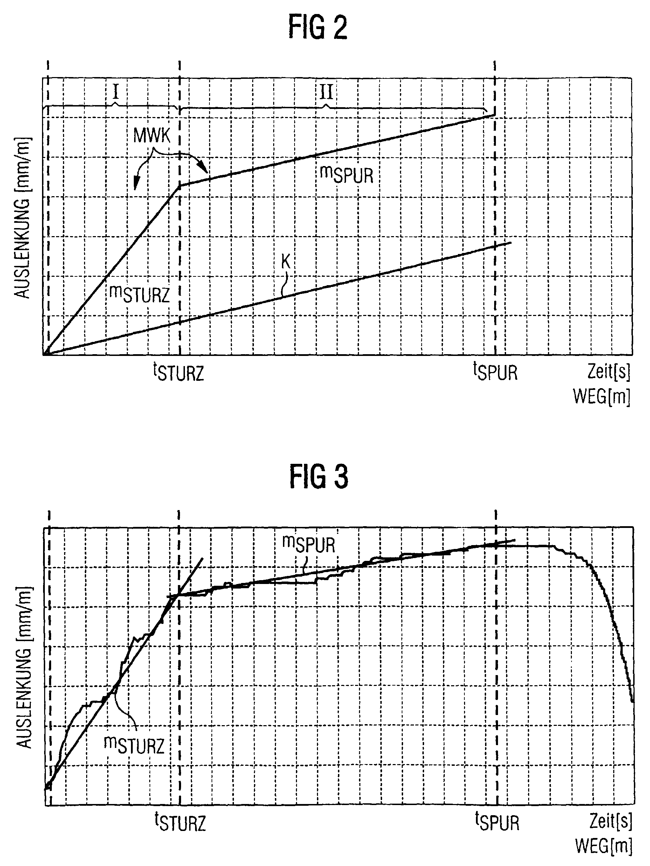

Fig. 2 zeigt schematisch eine vereinfachte bzw. idealisierte Meßwertkurve, wobei die Auslenkung [mm/m] der Spurmeßplatte als Ordinate und die Zeit [s], die das Rad zum Überfahren der Spurmeßplatte benötigt, bzw. Weg [m], den das Rad auf der Spurmeßplatte zurückgelegt hat, als Abszisse aufgetragen sind. Die Meßwertkurve MWK weist deutlich zwei Bereiche auf, nämlich einen ersten Bereich I, der für den Einfluß des Sturzes auf die Auslenkung der Spurmeßplatte charakteristisch ist, und einen zweiten Bereich II, der für den Einfluß der Spur auf die Auslenkung der Meßspurprüfplatte charakteristisch ist. Die Meßwertkurve MWK hat in dem ersten Bereich die Steigung $m_{sturz}$ und endet zu dem Zeitpunkt $t_{sturz}$. Der zweite Bereich II der Meßwertkurve MWK hat die Steigung $m_{spur}$ und endet zum Zeitpunkt $t_{spur}$. Da sowohl die Länge der Spurprüfplatte bekannt ist als auch die Meßzeiten mit Hilfe der elektronischen Auswertungseinrichtung erfaßt werden können, läßt sich durch die Ermittlung der Steigung im Bereich II und nachfolgende Parallelverschiebung der Linie durch den Nullpunkt des Koordinatensystems ein korrigiertes Ergebnis als Endergebnis ermitteln. Die durch Parallelverschiebung erhaltene Linie ist mit "k" bezeichnet.

Die Ermittlung des Spurwertes läuft wir folgt ab. Zunächst werden die beiden Bereiche definiert. Sodann wird die Steigung $m_{spur}$ ermittelt. Hier kann sowohl die Meßzeit als auch der Weg als Basis verwendet werden, da die Spurprüfplatte stets mit konstanter Geschwindigkeit überfahren wird und die Zeitdauer des Überfahrens von der elektronischen Auswertungseinrichtung festgehalten werden kann. Mit Hilfe der Steigung, der bekannten Länge der Spurprüfplatte und der gemessenen Zeit kann die Gerade in dem zweiten Bereich parallel nach unten verschoben werden, bis die Gerade durch den Nullpunkt des Koordinatensystems verläuft. Der Endwert der so ermittelten Geraden ist das Endergebnis der Spurprüfung.

Bei praktischen Messungen hat sich gezeigt, daß bei Fahrzeugen mit hohen Seitenführungskräften noch immer höhere Auslenkungen auftreten als bei konventionellen Fahrzeuggeometrien. Dies ist dadurch erklärbar, daß sich die Seitenführungskräfte auch beim Überfahren der Spurprüfplatte wieder aufbauen. Um diesen Effekt noch zu kompensieren, wird ein Korrekturfaktor Km für die Steigung m in Abhängigkeit von $t_{sturz}$ ermittelt, d. h. je größer $t_{sturz}$ ist, desto kleiner wird Km. Die Gesamtsteigung ergibt sich nach dieser Korrektur wie folgt:

$$m_{ges} = Km \times m.$$

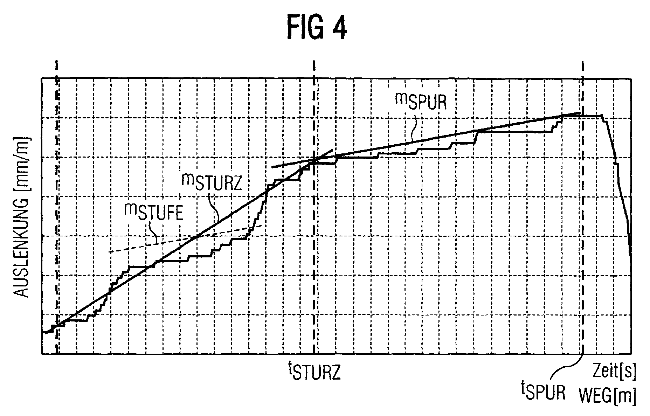

Die Fig. 3 und 4 zeigen tatsächliche Versuche mit Fahrzeugen mit großen Seitenführungskräften, d. h. großem Sturz, wobei es sich bei Fig. 3 um die Hinterachse eines BMW 540i und bei Fig. 4 um die Hinterachse eines Golf III handelt. Die Fahrzeuge wurden auf einer Spurprüfplatte vermessen, und das elektrische Signal, welches durch die Auslenkung der Spurprüfplatte erzeugt wurde, wurde mittels eines A/D-Wandlers digitalisiert und in einem Meßwertpuffer der Recheneinrichtung abgelegt. Die Zeitdauer zwischen zwei Meßwertaufnahmen durch den A/D-Wandler betrug 2 ms, die Auflösung 10 bit, das als Eingangsgröße dienende Signal betrug 0...5 V bzw. 0..1024 Digital, und der Nullpunkt bei 0mm/m lag bei etwa 605 Digital.

Bei der Auswertung der tatsächlichen Meßwertkurven wurde zunächst eine fließende Mittelwertbildung zur Glättung der Meßwertkurve durchgeführt, wobei ein Fenster mit sieben Meßwerten vom Start bis zum Ende der Messung über die Meßwertkurve geschoben wurde. Nach dem Start wird der Endpunkt $t_{sturz}$ festgelegt. Wenn die Steigung m < 0,5 ist, wird der Startpunkt für $t_{spur}$ gesetzt. Wenn die Steigung m > 0,6 ist, wird der Startpunkt von $t_{spur}$ wieder verworfen, um Stufen in dem Meßwertsignal auszufiltern. Dies ist in Fig. 4 im Bereich I zu sehen, wo die Meßwertkurve zeitweilig eine geringe Steigung $m_{stufe}$ aufweist, aber danach wieder steiler ansteigt, so daß es sich bei der Stufe nicht um den Übergang von dem Bereich I in den Bereich II handelt, sondern um eine Störung der Meßwertkurve im Bereich I. Wenn die Steigung m < -0,6 wird, wird der Endpunkt $t_{spur}$ gesetzt. Wenn das Fahrzeug die Spurplatte verlassen hat, bewegt sich die Spurprüfplatte in die Nullstellung zurück. Als nächstes wird die Steigung $m_{spur}$ im Bereich II von dem Startpunkt $t_{sturz}$ zum Endpunkt $t_{spur}$ ermittelt.

Für die Überfahrdauer gilt:

$$t_{ges} = t_{sturz} + t_{spur}.$$

Die Gesamtfahrdauer kann auf 1m Weg wie folgt umgerechnet werden:

$$t_{ges/m} = t_{ges} \times 1000mm/l_{Spurplatte}, \quad \text{wobei beispielsweise } l_{Spurplatte} = 700mm \text{ ist.}$$

Für die Auslenkung $A_{Spur/digit}$ gilt:

$$A_{Spur/digit} = m_{spur} \times n, \quad \text{mit } n = \text{Anzahl der Meßwerte von } t_{ges/m}$$

Durch die erwähnte Kalibrierung wird die berechnete Auslenkung $A_{Spur/digit}$ in ein Endergebnis in mm/m umgerechnet. Somit wird nach Ermittlung der Steigung im zweiten Bereich eine Parallelverschiebung der Geraden durch den Nullpunkt des Koordinatensystems durchgeführt und der Endwert der so ermittelten Geraden wird als Endergebnis ausgegeben.

## Patentansprüche

1. Verfahren zur Spurprüfung an einem am Kraftfahrzeug montierten Rad, bei dem mit dem Rad ein Spurprüfplatte überfahren wird, die senkrecht zur Fahrtrichtung bewegbar gelagert ist, die Auslenkung der Spurprüfplatte beim Überfahren gemessen wird und aus der Auslenkung die Spur des Rades ermittelt wird, dadurch gekennzeichnet, daß die Auslenkung der Spurprüfplatte während des Überfahrens an einer Vielzahl von Meßpunkten gemessen und in einer Meßkurve festgehalten wird, daß die Meßkurve in Meßkurvenbereiche unterteilt wird, von denen ein erster Meßkurvenbereich für den Einfluß des Sturzes und ein zweiter Bereich für den Einfluß der Spur charakteristisch ist, und daß aus der Steigung der Meßwertkurve im zweiten Bereich die Spur des Rades ermittelt wird.

2. Verfahren nach Anspruch 1, dadurch gekennzeichnet, daß 200 bis 400 Meßwerte beim Überfahren der Spurprüfplatte gemessen und abgespeichert werden.

3. Verfahren nach Anspruch 1, dadurch gekennzeichnet, daß die Auslenkung der Spurprüfplatte in analoge elektrische Signale umgesetzt und die analogen Signale digitalisiert und in einem Meßwertpuffer abgelegt werden.

4. Verfahren nach Anspruch 1, dadurch gekennzeichnet, daß die Meßwertkurve vor deren Auswertung durch fließende Mittelwertbildung geglättet wird.

**5.** Verfahren nach Anspruch 1, dadurch gekennzeichnet, daß der erste Bereich vom Beginn der Messung bis zu einem Startpunkt für den zweiten Bereich reicht, an dem die Steigung der Meßwertkurve einen vorgegebenen ersten Grenzwert, vorzugsweise 0,5, überschreitet.

**6.** Verfahren nach Anspruch 1, dadurch gekennzeichnet, daß der Startpunkt für den zweiten Bereich verworfen wird, wenn die Steigung der Meßwertkurve nach einer Festlegung desselben einen vorgegebenen zweiten Grenzwert, vorzugsweise 0,6, überschreitet.

**7.** Verfahren nach Anspruch 1, dadurch gekennzeichnet, daß der Endpunkt des zweiten Bereiches dadurch festgelegt wird, daß an dem Endpunkt die Steigung kleiner als ein vorgegebener dritter Grenzwert, vorzugsweise -0,6, ist.

**8.** Verfahren nach Anspruch 1, dadurch gekennzeichnet, daß die Steigung der Meßwertkurve in dem zweiten Bereich aus dem Startpunkt und dem Endpunkt berechnet wird.

**9.** Verfahren nach Anspruch 1, dadurch gekennzeichnet, daß der von der Spur gelieferte Beitrag der Auslenkung durch Kalibrierung der ermittelten Steigung ermittelt wird.

**10.** Verfahren nach Anspruch 9, dadurch gekennzeichnet, daß nach Ermittlung der Steigung im zweiten Bereich eine Parallelverschiebung der Geraden durch den Nullpunkt des Koordinatensystems durchgeführt und der Endwert der so ermittelten Geraden als Endergebnis ausgegeben wird.

**11.** Vorrichtung zur Spurprüfung an einem am Kraftfahrzeug montierten Rad, umfassend eine Spurprüfplatte, die mit dem Rad überfahren wird, und die senkrecht zur Fahrtrichtung bewegbar gelagert ist, eine Meßeinrichtung, die die Auslenkung der Spurprüfplatte beim Überfahren mißt, und eine Auswertungseinrichtung, die aus der Auslenkung der Spurprüfplatte die Spur des Rades er-mittelt, dadurch gekennzeichnet, daß die Meßeinrichtung die Auslenkung der Spurprüfplatte während des Überfahrens an einer Vielzahl von Meßpunkten mißt, daß ein Speicher vorgesehen ist, in dem die Meßpunkte abgelegt werden, daß eine Recheneinrichtung vorgesehen ist, die die Meßpunkte in eine Meßkurve umsetzt und die Meßkurve in Bereiche aufteilt, von denen ein erster Meßkurvenbereich für den Einfluß des Sturzes und ein zweiter Meßkurvenbereich für den Einfluß der Spur charakteristisch ist, und die aus der Steigung der Meßkurve im zweiten Meßkurvenbereich die Spur des Rades ermittelt.

**12.** Vorrichtung nach Anspruch 11, dadurch gekennzeichnet, daß die Meßeinrichtung an der Spurmeßplatte derart angeordnet ist, daß die Auslenkung der Spurprüfplatte in analoge elektrische Signale umgesetzt wird, und daß ein Analog/Digital-Wandler vorgesehen ist, der die analogen Signale digitalisiert, und daß ein Meßwertpuffer für die Abspeicherung der digitalen Meßwerte vorgesehen ist.

# FIG 1

# FIG 2

# FIG 3

# FIG 4

AUSLENKUNG [mm/m]

$m_{SPUR}$

$m_{STURZ}$

$m_{STUFE}$

$t_{STURZ}$

$t_{SPUR}$

Zeit[s]

WEG[m]

# EP 1 096 221 A1

Europäisches Patentamt

**EUROPÄISCHER RECHERCHENBERICHT**

Nummer der Anmeldung

EP 00 11 6057

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 5 386 639 A (COLARELLI III NICHOLAS J ET AL) 7. Februar 1995 (1995-02-07) * Zusammenfassung * | 1,11 | G01B5/255 G01B21/26 G01M17/06 |
| A | PATENT ABSTRACTS OF JAPAN vol. 017, no. 425 (P-1587), 6. August 1993 (1993-08-06) & JP 05 087700 A (MITSUBISHI MOTORS CORP), 6. April 1993 (1993-04-06) * Zusammenfassung * | 1,11 | |
| A | PATENT ABSTRACTS OF JAPAN vol. 017, no. 654 (P-1653), 3. Dezember 1993 (1993-12-03) -& JP 05 215650 A (HONDA MOTOR CO LTD;OTHERS: 01), 24. August 1993 (1993-08-24) * Zusammenfassung; Abbildungen 1-3 * | 1,11 | |
| A | EP 0 816 801 A (BRIDGESTONE CORP) 7. Januar 1998 (1998-01-07) * Zusammenfassung * | 1,11 | |

RECHERCHIERTE SACHGEBIETE (Int.Cl.7)

G01B
G01M

Der vorliegende Recherchenbericht wurde für alle Patentansprüche erstellt

| Recherchenort | Abschlußdatum der Recherche | Prüfer |
|---|---|---|
| DEN HAAG | 22. Januar 2001 | Arca, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

10

ANHANG ZUM EUROPÄISCHEN RECHERCHENBERICHT
ÜBER DIE EUROPÄISCHE PATENTANMELDUNG NR.

EP 00 11 6057

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-01-2001

| Im Recherchenbericht angeführtes Patentdokument | Datum der Veröffentlichung | Mitglied(er) der Patentfamilie | Datum der Veröffentlichung |
|---|---|---|---|
| US 5386639 A | 07-02-1995 | KEINE | |
| JP 05087700 A | 06-04-1993 | JP 2682298 B | 26-11-1997 |
| JP 05215650 A | 24-08-1993 | JP 2998814 B | 17-01-2000 |
| EP 0816801 A | 07-01-1998 | JP 10007013 A<br>US 5930881 A | 13-01-1998<br>03-08-1999 |

EPO FORM P0461

Für nähere Einzelheiten zu diesem Anhang : siehe Amtsblatt des Europäischen Patentamts, Nr.12/82